(19) Europäisches Patentamt
European Patent Office
Office européen des brevets

(11) **EP 1 141 982 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**12.08.2015 Patentblatt 2015/33**

(45) Hinweis auf die Patenterteilung:
**23.01.2008 Patentblatt 2008/04**

(21) Anmeldenummer: **99971144.3**

(22) Anmeldetag: **26.10.1999**

(51) Int Cl.:
*H01G 4/18* [(2006.01)]  *C08J 5/18* [(2006.01)]

(86) Internationale Anmeldenummer:
**PCT/EP1999/008090**

(87) Internationale Veröffentlichungsnummer:
**WO 2000/025330 (04.05.2000 Gazette 2000/18)**

(54) **BIAXIAL ORIENTIERTE ELEKTROISOLIERFOLIE MIT VERBESSERTEM SCHRUMPF BEI ERHÖHTEN TEMPERATUREN**

BIAXIALLY ORIENTED SHEETING FOR ELECTRICAL INSULATION WITH IMPROVED SHRINKAGE AT ELEVATED TEMPERATURES

FILM ISOLANT ELECTRIQUE BIAXIALLEMENT ORIENTE AYANT UN MEILLEUR RETRECISSEMENT A HAUTES TEMPERATURES

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **28.10.1998 DE 19849678**

(43) Veröffentlichungstag der Anmeldung:
**10.10.2001 Patentblatt 2001/41**

(73) Patentinhaber: **Treofan Germany GmbH & Co. KG
66539 Neunkirchen (DE)**

(72) Erfinder:
• **KOCHEM, Karl-Heinz
D-66539 Neunkirchen (DE)**
• **MÜLLER-NAGEL, Kerstin
D-66809 Nalbach-Körprich (DE)**

(74) Vertreter: **Reiss, Gilles François
Treofan Germany GmbH & Co. KG
Am Primeparc 17
65479 Raunheim (DE)**

(56) Entgegenhaltungen:
| | |
|---|---|
| **EP-A- 0 498 249** | **EP-A- 0 755 779** |
| **EP-A- 0 776 926** | **EP-A1- 0 645 426** |
| **EP-A1- 0 755 779** | **EP-A2- 0 776 926** |
| **WO-A1-00/25330** | **GB-A- 1 250 450** |
| **JP-A- H06 297 658** | **US-A- 3 361 728** |
| **US-A- 4 981 938** | |

• **PATENT ABSTRACTS OF JAPAN ZUR PATENTSCHRIFT JP-A-H06297658**
• **Französische Übersetzung der Patentschrift JP-A-6297658**

EP 1 141 982 B2

**EP 1 141 982 B2**

**Beschreibung**

Die Erfindung betrifft eine Polypropylenfolie mit verbesserten Eigenschaften für die Verwendung als Elektroisolierfolie in Kondensatoren.

Die EP-A-0 645 426 beschreibt eine biaxial orientierte Polypropylenfolie deren n-heptanunlöslicher Anteil einen Kettenisotaxie-Index, gemessen mittels $^{13}$C-NMR-Spektroskopie, von mindestens 95 % aufweist. Die Basisschicht enthält im wesentlichen kein Harz. Der Elastizitätsmodul der Folie in Längsrichtung ist größer 2 500 N/mm$^2$ Der Elastizitätsmodul der Folie in Querrichtung ist größer 4 000 N/mm$^2$. Nach der Aufgabenstellung der EP-A-0 645 426 sollen diese Polypropylenfolien einen niedrigen Restschrumpf aufweisen. Die Beschreibung beinhaltet keine Angaben zu den Schrumpfwerten.

EP-A- 776 926 beschreibt eine biaxial orientierte Folie für die Kondensatoranwendung, welche bei 120°C in Längs- und Querrichtung einen Gesamtschrumpf von 1-4% aufweist. Die Folie besteht aus einem hochisotaktischen Polypropylen und weist eine Isotaktizität von 98-99,5% und eine isotaktische Pentadfraktion von >99% auf. Über das Schrumpfverhalten der Folie bei Temperaturen von über 120°C werden keine Angaben gemacht.

Bei der aus EP-A-775 779 bekannten biaxial orientierten Polypropylenfolie liegt der n-heptanlösliche Anteil des Polypropylens unter 1%.

In WO 97/05634 wird ein Kondensator beschrieben, dessen Dielektrikum aus einer Polypropylenfolie mit einem Elastizitätsmodul größer 1500 MPa, einer Fließtempratur oberhalb 110°C und einem Vicaterweichungspunkt größer 150°C besteht. Die Folie weißt unter anderem ein verbessertes Schrumpfverhalten in Längsrichtung zwischen 100°C und 150°C auf. Das Schrumpfverhalten in Querrichtung wird nicht beschrieben.

Die Aufgabe der vorliegenden Erfindung bestand darin, eine biaxial orientierte Polypropylenfolie zur Verfügung zu stellen, welche zu verbesserten Gebrauchseigenschaften der daraus hergestellten Kondensatoren beiträgt. Insbesondere die Verbesserung der elektrischen Verlustfaktoren und die Temperaturbeständigkeit der Kondensatoren sind in der Fachwelt ein ständiges Bedürfnis.

Zur Herstellung von Folienkondensatoren werden die Folien im allgemeinen zunächst metallisiert und anschließend gewickelt. Bereits die Metallisierung der Folie beinhaltet eine Temperaturbelastung, welcher die Folie standhalten muß, d.h. es darf bei der Metallisierung nicht zu Dimensionsänderungen der Folie durch Schrumpfungen kommen.

Somit ist die Folie sowohl während der Verarbeitung zum metallisierten Wickel als auch während des Gebrauchs des Kondensators häufig erhöhten Temperaturen ausgesetzt. Es wurde gefunden, daß insbesondere bei sogenannten Leistungskondensatoren für Hochspannungsanwendungen lokal im Inneren des Kondensators durch fließende Ströme oder Entladungsvorgängen zwischen Folienlagen extreme Temperaturen in lokalen Bereichen auftreten können, sogenannte Hot Spot-Temperaturen. Hierbei werden nach vorliegenden Untersuchungen stellenweisen Temperaturen von deutlich über 120°C bis zu 140 °C erreicht.

Aus den vorstehend genannten Gründen kommt der Temperaturbeständigkeit der Folie bei ihrer Verwendung in Kondensatoren eine besondere Bedeutung zu. Insbesondere sollte die Folie bei den gegebenen Belastungen durch erhöhte Temperaturen einen möglichst geringen Schrumpf aufweisen, wobei gleichzeitig die anderen vorteilhaften Eigenschaften nicht beeinträchtigt werden dürfen.

Nach der Herstellung des Wickels werden dessen Stirnseiten mit einem Metallspray, im allgemeinen Zink, bedampft, um einen guten Kontakt zwischen den metallisierten Folienlagen und den anzulegenden Kontaktdrähten zu gewährleisten. Die vorliegende Erfindung geht von der Erkenntnis aus, daß Schrumpfungen, die durch Temperaturbelastungen während des Gebrauchs des Kondensators auftreten, diesen Kontakt zwischen Draht und metallisierter Folie beeinträchtigen. Die Folge sind verschlechterte Verlustfaktoren und Kapazitätsdrifts.

Insbesondere bei sprunghaften Änderungen der Temperatur besteht die Gefahr, daß die Kontakte durch Dimensionsänderungen des Wickels, welche ihrerseits durch Schrumpfungen verursacht werden, reißen. Dadurch wird eine weitere Erhöhung des elektrischen Verlustfaktors (tan $\delta$) ausgelöst; der Kondensator wird immer schneller heißer, was im Extremfall zum Totalausfall des Kondensators führen kann. Es wurde gefunden, daß die Gebrauchseigenschaften des Kondensators eng mit der Temperaturbeständigkeit der Folie bei erhöhten Temperaturen zusammenhängen. Insbesondere der elektrische Verlustfaktor der Kondensatoren wird durch einen niedrigen Schrumpf der Folie bei erhöhten Temperaturen verbessert.

In Zusammenhang mit der vorliegenden Erfindung wurde gefunden, daß hierbei Längs- und Querschrumpf der Folie differenziert zu betrachten sind. Neben einem niedrigen Längsschrumpf der Folie kommt insbesondere dem Querschrumpf eine noch größere Bedeutung zu, wobei nicht nur die absoluten Schrumpfwerte einen Einfluß haben, sondern auch die relative Temperaturabhängigkeit des Querschrumpfs im Bereich von 120 - 140°C. Überraschenderweise zeigen die Kondensatoren eine verbesserte Temperaturbeständigkeit des Verlustfaktors und eine verbesserte zeitliche Kapazitätsdrift, wenn der Querschrumpf im besagten Temperaturintervall einen besonders niedrigen Anstieg mit ansteigenden Temperaturen aufweist.

Diese vorstehend formulierte Aufgabe wird erfindungsgemäß durch eine biaxial orientierte Polypropylenfolie mit den Merkmalen des Anspruchs 1 gelöst, wobei der Schrumpf der Folie bei erhöhten Temperaturen niedrig ist und die Querschrumpfkurve flacher verläuft und die Verlustfaktoren insbesondere nach Lagerung niedriger sind.

Erfindungsgemäß kann die Folie einschichtig sein und besteht dann nur aus der im folgenden beschriebenen Basisschicht. In einer bevorzugten Ausführungsform weist die Folie auf ihrer Basisschicht mindestens eine, gegebenenfalls beidseitig Deckschicht/en auf.

Die Basisschicht der Folie enthält im allgemeinen mindestens 95 Gew.-%, vorzugsweise 99 bis 100 Gew.-%, jeweils bezogen auf die Basisschicht, eines nachstehend beschriebenen hochisotaktischen Propylenhomopolymeren.

Dieses Propylenhomopolymer enthält mindestens 98 bis 100 Gew.-%, insbesondere 99 bis 100 Gew.-%, Propylen. Der entsprechende Comonomergehalt von höchstens 2 Gew.-% bzw. insbesondere 0 bis 1 Gew.-% besteht, wenn vorhanden, im allgemeinen aus Ethylen. Die Angaben in Gew.-% beziehen sich jeweils auf das Propylenhomopolymere.

Das Propylenhomopolymere der Basisschicht hat einen Schmelzpunkt von 160 bis 170 °C, vorzugsweise von 162 bis 167 °C, und einen Schmelzflußindex (Messung DIN 53735 bei 21,6 N Belastung und 230 °C) von 0,5 bis 10 g/10 min, vorzugsweise von 0,7 bis 3,5 g/10 min. Der n-heptanlösliche Anteil des Polymeren beträgt im allgemeinen 1 bis 3 Gew.-%, vorzugsweise 1 bis 2 Gew.-% bezogen auf das Ausgangspolymere, entsprechend einem isotaktischen Anteil von 97 bis 99%, vorzugsweise 98 bis 99%. Der mittels $^{13}$C-NMR-Spektroskopie bestimmte Kettenisotaxie-Index (Triadenmethode) des Propylenhomopolymeren beträgt mindestens 95 bis 99 %, vorzugsweise 95,5 bis 98 %. Die isotaktischen Pentadenfraktionen, die ebenfalls aus dem $^{13}$C-NMR-Spektrum des Polymeren bestimmt werden, liegen im Bereich von 85 bis 95%, vorzugsweise zwischen 87 bis 92%. Die Molekulargewichtsverteilung (bestimmt mittels GPC) des Propylenhomopolymeren ausgedrückt als Verhältnis des Gewichtsmittels $M_w$ zum Zahlenmittel $M_n$ liegt im allgemeinen zwischen 2 und 8, vorzugsweise zwischen 4 und 7. Das mittlere Molekulargewicht Mw (Gewichtsmittel) bestimmt mittels GPC liegt im Bereich von 200.000 und 500.000, vorzugsweise 250.000 bis 400.000.

In Hinblick auf den vorgesehenen Anwendungszweck der erfindungsgemäßen Folie als Kondensatorfolie soll das Propylenhomopolymer einen Aschegehalt von < 35 ppm, vorzugsweise zwischen 10 und 30 ppm, und einen Chlorgehalt von maximal 5 ppm, aufweisen.

Das Schrumpfverhalten einer Folie wird durch mehrere Faktoren bestimmt. Für den Schrumpf sind die verwendeten Rohstoffe, das Herstellverfahren und die Foliendicke ausschlaggebend. Grundsätzlich neigen die dünnere Folien zu einem höheren Schrumpf sowohl in Längs- als auch in Querrichtung, was mit dem unterschiedlichen Grad der Orientierung der Molekülketten bei sehr dünnen Folien zusammenhängt. Dieser Effekt wirkt um so stärker je höher die Temperaturbelastung ist, d.h. bei sehr dünnen Folien steigt der Schrumpf, insbesondere der Querschrumpf mit zunehmender Temperatur stärker an als dies bei dickeren Folien der Fall ist. Des weiteren hat auch das Herstellverfahren einen wesentlichen Einfluß. Daher können die Auswirkungen verschiedener Maßnahmen auf den Schrumpf untereinander nur verglichen werden, wenn die Verfahrensbedingungen, insbesondere Streckfaktoren und Strecktemperaturen, bei der Herstellung im wesentlichen nicht geändert werden.

Im Rahmen der vorliegenden Erfindung wurde gefunden, daß bei Verwendung des vorstehend beschriebenen hochisotaktischen Propylenhomopolymeren zur Herstellung der Folie die gewünschten Schrumpfeigenschaften wesentlich verbessert werden konnten. Gegenüber bekannten Folien aus hochisotaktischem Polypropylen zeigen die erfindungsgemäßen Folien aus dem vorstehend beschriebenen hochisotaktischen Polypropylen ein deutlich verbessertes Schrumpfverhalten, welches sich zum einen in einem niedrigeren Längsschrumpf und gleichzeitig in einem deutlich flacheren Verlauf der Schrumpfkurve (Temperaturabhängigkeit) für den Querschrumpf niederschlägt.

Infolge der Abhängigkeit der Schrumpfeigenschaften von der Foliendicke, müssen die Auswirkungen für verschiedene Dickenbereiche gesondert betrachtet werden. Zu diesem Zweck werden im Rahmen der vorliegenden Erfindung drei Gruppen unterschieden:

Bereich I:     Foliendicke 3 - < 4,5 $\mu$m

Bereich II:    Foliendicke 4,5 - 12$\mu$m

Bereich III:   Foliendicke > 12$\mu$m - 20 $\mu$m

Bereich I:

Durch die Verwendung des hochisotaktischen Polypropylens haben Folien von < 4,5$\mu$m einen Schrumpf in Längsrichtung von maximal 5,5% bei 120°C bzw. maximal 8% bei 140°C, vorzugsweise im Bereich von 2 bis 4,5% bei 120°C bzw. von 4 bis 7% bei 140°C und einen Schrumpf in Querrichtung von maximal 2% bei 120°C bzw. 6,5% bei 140°C, vorzugsweise im Bereich von $\leq$ 1,5% bei 120°C bzw. von 2 bis 5,5% bei 140°C.

Bereich II:

Durch die Verwendung des hochisotaktischen Polypropylens haben Folien von 4,5 - 12$\mu$m einen Schrumpf in

Längsrichtung von maximal 4,5% bei 120°C bzw. maximal 6,5% bei 140°C, vorzugsweise im Bereich von 1,5 bis 4% bei 120°C bzw. von 3,5 bis 6% bei 140°C und einen Schrumpf in Querrichtung von maximal 1,5% bei 120°C bzw. 5,5% bei 140°C, vorzugsweise im Bereich von ≤1,2% bei 120°C bzw. von 1,5 bis 4,5% bei 140°C.

Bereich III:

Durch die Verwendung des hochisotaktischen Polypropylens haben Folien von > 12 μm - 20 μm einen Schrumpf in Längsrichtung von maximal 4,0% bei 120°C bzw. maximal 5,5% bei 140°C, vorzugsweise im Bereich von 1 bis 3,5% bei 120°C bzw. von 3 bis 5% bei 140°C und einen Schrumpf in Querrichtung von maximal 1,5% bei 120°C bzw. 4,5% bei 140°C, vorzugsweise im Bereich von ≤ 1,0% bei 120°C bzw. von 1 bis 4% bei 140°C.

Ein weiteres Kriterium, welches erfindungsgemäß neben den Maximalwerten des Längs- und Querschrumpfes erfüllt sein muß, ist die Differenz der Querschrumpfwerte bei 140 und 120°C, wodurch ein flacherer Verlauf der Querschrumpfkurve charakterisiert wird. Diese Differenzen müssen wie die Schrumpfwerte selbst differenziert nach der Foliendicke betrachtet werden:

Bereich I:     Δ Querschrumpf bei 140°C - Querschrumpf bei 120°C = < 3,5%

Bereich II:    Δ Querschrumpf bei 140°C - Querschrumpf bei 120°C = < 3,0%

Bereich III:   Δ Querschrumpf bei 140°C - Querschrumpf bei 120°C = < 2,5%

Die Basisschicht der erfindungsgemäßen Folie enthält im allgemeinen Neutralisationsmittel und Stabilisatoren in jeweils wirksamen Mengen. Im Verpackungsfolienbereich übliche Additive wie Antiblockmittel, Antistatika, Gleitmittel und Pigmente werden im allgemeinen in Hinblick auf die Verwendung als Kondensatorfolie nicht zugesetzt.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische oder phosphitische Stabilisatoren, Alkali-/Erdalkalistearate und/oder Alkali/Erdalkalicarbonate. Phenolische oder phosphitische Stabilisatoren werden in einer Menge von 0,05 bis 0,6 Gew.-%, insbesondere 0,1 bis 0,5 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 μm, einer absoluten Teilchengröße von kleiner 10 μm und einer spezifischen Oberfläche von mindestens 40 $m^2$/g. Neutralisationsmittel sind im allgemeinen in einer Menge von 0,001 bis 0,5 Gew.-% , vorzugsweise zwischen 0,005 und 0,1 Gew.-% zugesetzt. Die Angaben in Gew.-% beziehen sich jeweils auf das Gewicht der Basisschicht.

Die erfindungsgemäße Polypropylenfolie umfaßt gegebenenfalls ein-oder beidseitig Deckschicht/en aus Polypropylen, die im allgemeinen mindestens 95 Gew.-%, vorzugsweise 99 bis 100 Gew.-%, jeweils bezogen auf die Deckschicht, eines nachstehend beschriebenen Propylenhomopolymeren enthält/enthalten.

Das Propylenhomopolymer enthält mindestens 98 bis 100 Gew.-%, insbesondere 99 bis 100 Gew.-%, Propylen. Der entsprechende Comonomergehalt von höchstens 2 Gew.-% bzw. 0 bis 1 Gew.-% besteht, wenn vorhanden, im allgemeinen aus Ethylen. Die Angaben in Gew.-% beziehen sich jeweils auf das Propylenhomopolymere. Das in der Deckschicht eingesetzte Propylenhomopolymere besitzt einen Schmelzpunkt von 140 °C oder höher, vorzugsweise 150 bis 170 °C, wobei isotaktisches Homopolypropylen mit einem n-heptanlöslichen Anteil von 5 Gew.-% und weniger, bezogen auf das isotaktische Homopolypropylen, - bevorzugt ist. Das Homopolymere hat im allgemeinen einen Schmelzflußindex von 1,0 bis 10 g/10 min, vorzugsweise 1,5 bis 5 g/10 min. Gegebenenfalls enthält die Deckschicht das vorstehend für die Basisschicht beschriebene hochisotaktische Propylenhomopolymere.

Gegebenenfalls können der/den Deckschicht/en die vorstehend für die Basisschicht beschriebenen Neutralisationsmittel und/oder Stabilisatoren zugesetzt werden. Auch die Deckschichten enthalten in einer bevorzugten Ausführungsform keine üblichen Additive wie Antiblockmittel, Antistatika, Gleitmittel und Pigmente in Hinblick auf die Verwendung als Kondensatorfolie.

Die Dicke der Deckschicht/en ist größer als 0,1 μm und liegt vorzugsweise im Bereich von 0,3 bis 3 μm, insbesondere 0,4 bis 1,5 μm, wobei beidseitige Deckschichten gleich oder verschieden dick sein können.

Die Gesamtdicke der erfindungsgemäßen Polypropylenfolie kann innerhalb weiter Grenzen variieren und richtet sich nach dem beabsichtigten Einsatz. Sie beträgt vorzugsweise 1 bis 20 μm, vorzugsweise 3,5 bis 15 μm, wobei die Basisschicht etwa 40 bis 100 % der Gesamtfoliendicke ausmacht.

Die Erfindung betrifft weiterhin ein Verfahren zur Herstellung der erfindungsgemäßen Polypropylenfolie nach dem an sich bekannten Coextrusionsverfahren, welches durch die Merkmale des Anspruchs 13 definiert ist.

Im Rahmen dieses Verfahrens wird so vorgegangen, daß die Schicht oder die den einzelnen Schichten der Folie entsprechende/n Schmelze/n durch eine Flachdüse coextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Metallisierung vorgesehenen Oberflächenschicht/en corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Grundsätzlich ist auch eine simultane Streckung in Längs- und Querrichtung möglich.

Zunächst wird wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstreckverhältnisse liegen im Bereich von 4,0 bis 8,0 vorzugsweise 4,5 bis 6,5. Die Querstreckverhältnisse liegen im Bereich von 6,0 bis 10,0, vorzugsweise zwischen 7 und 9,5.

An die biaxiale Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 30 bis 120 °C, vorzugsweise zwischen 60 und 100 °C, zu halten. Die erhöhten Abzugswalzentemperaturen begünstigen die Bildung von $\beta$-Sphäroliten in der Vorfolie. Diese $\beta$-Sphärolite erzeugen die für Elektrofolien gewünschte verfahrensbedingte Oberflächenrauheit, wie in EP-A-0 497 160 beschrieben.

Bevor die so abgekühlte Vorfolie in das Längsstreckwerk geführt wird, wird sie üblicherweise bei einer Temperatur von 110 - 150°C, vorzugsweise bei 120 - 140°C vorgeheizt. Diese Vorheizung kann mittels geheizter Walzen erfolgen, grundsätzlich jedoch auch mit anderen gängigen Verfahren wie beispielsweise IR-Strahler, beheizte Luft etc.

Die Temperaturen, bei denen Längs- und Querstreckung durchgeführt werden, richten sich nach den gewünschten Eigenschaften, insbesondere der zu erzeugenden Oberflächenrauheit der Folie. Im allgemeinen wird die Längsstreckung bei 120 bis 160 °C, vorzugsweise 130 - 160°C und die Querstreckung bei 140 bis 170 °C , vorzugsweise 150 - 170°Cdurchgeführt.

Bevorzugt wird/werden nach der biaxialen Streckung eine oder beide Oberfläche/n der Folie nach einer der bekannten Methoden corona- oder flamm-behandelt. Die Behandlungsintensität liegt im allgemeinen im Bereich von 34 bis 50 mN/m, vorzugsweise 36 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung ohne Anlegen einer Spannung, welche auch für die Vorbehandlung der Oberfläche geeignet ist.

Die erfindungsgemäße Folie zeichnet sich durch einen niedrigen Schrumpf bei erhöhten Temperaturen und durch einen flachen Verlauf der Schrumpfkurve für den Querschrumpf aus.

Zur Charakterisierung der Rohstoffe und der Folien wurden die folgenden Meßmethoden benutzt:

Schmelzflußindex

Der Schmelzflußindex wurde nach DIN 53 735 bei 21,6 N Belastung und 230 °C gemessen.

**5**

Schmelzpunkt

DSC-Messung, Maximum der Schmelzkurve, Aufheizgeschwindigkeit 20 °C/min.

E-Modul

Der E-Modul wird frühestens 10 Tage nach der Produktion gemäß EN ISO 521-1 an einer Probe einer Größe von 15*100 mm$^2$. bestimmt.

Reißfestigkeit, Reißdehnung

Die Reißfestigkeit und die Reißdehnung werden gemäß EN ISO 521-1 an einer Probengröße von 15*100 mm$^2$ bestimmt.

Schrumpf:

Die Längs- und Querschrumpfwerte beziehen sich auf die jeweilige Längenausdehnung der Folie (längs $L_0$ und quer $Q_0$) vor dem Schrumpfprozeß. Die Längsrichtung ist die Maschinenrichtung, als Querrichtung wird entsprechend die Richtung quer zum Maschinenlauf definiert. Der Probekörper von 10*10cm$^2$ wird im Umluftofen bei der jeweiligen Temperatur (von100 bis 140°C) über eine Dauer von 15 min geschrumpft. Anschließend werden die verbliebenen Längenausdehnungen des Probekörpers längs und quer erneut bestimmt ($L_1$ und $Q_1$). Als Schrumpf in % wird dann die Differenz der ermittelten Längenausdehnungen im Verhältnis zur ursprünglichen Länge $L_0$ und $Q_0$ mal 100 angegeben.

$$L\ddot{a}ngsschrumpf\ L_s[\%] \ = \ \frac{L_0 - L_1}{L_0} * 100[\%]$$

$$Querschrumpf\ Q_s[\%] \ = \ \frac{Q_0 - Q_1}{Q_0} * 100[\%]$$

Diese Bestimmungsmethode für den Längs- und Querschrumpf entspricht DIN 40634.

Dielektrischer Verlustfaktor:

Die Messung des dielektrischen Verlustfaktors (tan $\alpha$) wird nach VDE 0303, Teil 4 durchgeführt. Die Folienproben werden vor der Messung in einer Vakuumbedampfungsanlage beidseitig mit Aluminium bedampft. Die Größe der Meßfläche F (= bedampfter Fläche) richtet sich nach der Foliendicke d:

  für eine Foliendicke d von $\leq$ 10 $\mu$m eine Fläche von 1 cm$^2$
  für eine Foliendicke d von > 10 $\mu$m eine Fläche von 5 cm$^2$

Es wird von jedem zu prüfenden Muster eine Doppelbestimmung durchgeführt und der Mittelwert gebildet. Die Proben werden in einen Trockenschrank gelegt. Die untere Elektrodenplatte besteht aus Messing. Die obere Elektrode ist zylinderförmig und besteht ebenfalls aus Messing. Die Prüfspannung beträgt 1 V. Die Messung erfolgt bei drei Frequenzen von 0,1 KHz, 1 KHz und 10 KHz.

Restaschegehalt:

Zur Messung des Restaschegehalts wird der Anteil der nicht verbrennbaren Füllstoffe quantitativ bestimmt. Der Restaschegehalt (Glühverlust) errechnet sich aus dem Ausgangsgewicht der Probe und dem Glührückstand. Das Meßergebnis wird in ppm angegeben. Aus dem zu prüfenden Material (Granulat, Regenerat usw.) wird eine repräsentative Stichprobe von ca. 1 kg entnommen. Das Material muß sauber und vollkommen trocken sein; eventuell ist ein Vortrocknen bei ca. 80 °C im Umluftwärmeschrank erforderlich. Drei leere Porzellantiegel werden mindestens 1 h lang bei einer Temperatur von 650 °C im Tiegelofen geglüht und nach Abkühlung im Exsikkator auf Raumtemperatur auf 0,1 mg Genauigkeit gewogen. Das Glühen wird wiederholt, bis zwischen zwei aufeinanderfolgenden Wägungen Gewichtskonstanz erreicht ist. Danach wird in jeden Tiegel 50 g (±0,1 g) Material eingewogen und in den 650°C heißen Muffelofen gegeben. Die Temperatur im Ofen wird jetzt auf 1 000°C hochgefahren und bei dieser Temperatur mindestens 1 h geglüht. Nach Abkühlung der Tiegel im Exsikkator werden diese auf 0,1 mg Genauigkeit ausgewogen. Der Aschegehalt wird in Maßeinheit ppm (parts per million) = $mg/m^3$ angegeben. Alle drei Tiegel werden nach der folgenden Formel ausgewertet, und die beiden am wenigsten differierenden Werte zu einem Mittelwert zusammengefaßt:

$$ppm = \frac{Auswaage\ (g)}{Einwaage\ (g)} \times 1\ 000\ 000$$

Chlorgehalt

Der Chlorgehalt in Polyolefinen wird quantitativ mittels Röntgen-Fluoreszenz-Analyse (RFA) nach DIN 51 001, Teil 1, gemessen. Es wird eine Tablette aus Granulat/Pulver gepreßt, die mit der RFA gegen eine Kalibrierkurve vermessen wird. Die Kalibrierkurve wurde mit Hilfe von 10 Kalibrierproben aufgestellt, in denen der Chlorgehalt nach einer unabhängigen Methode (naßtechnisch) bestimmt wurde. (Werte für den Chlorgehalt von unterhalb 5ppm werden aus Genauigkeitsgründen numerisch nicht angegeben, Angabe < 5ppm).

Rauhigkeit

Die Rauhigkeit wurde in Anlehnung an DIN 4768 mit DIN 4762 bestimmt.

Oberflächenspannung

Die Oberflächenspannung wurde mittels der sogenannten Tintenmethode (DIN 53 364) bestimmt.

Molekulargewichtsbestimmung

Die mittlere Molmasse und die mittlere Molmassen-Dispersität wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden Homopolymeren bei Raumtemperatur nicht löslich sind, wird die gesamte Messung bei erhöhter Temperatur (bei135°C) durchgeführt.

Isotaktischer Anteil

Der isotaktische Anteil des Homopolymeren kann in Näherung durch die unlösliche Fraktion des Rohstoffes in n-Heptan charakterisiert werden. Üblicherweise führt man eine Soxlet-Extraktion mit siedendem n-Heptan durch, wobei es zweckmäßig ist, das Soxlet anstelle von Granulat mit einem Preßling zu befüllen. Die Dicke des Preßlings sollte hierbei 500 Mikrometer nicht übersteigen. Für die quantitative Erfassung des n-heptan unlöslichen Anteils des Homopolymeren ist es von entscheidender Bedeutung, eine ausreichende Extraktionszeit von 8 bis 24 Stunden sicherzustellen.

Die operationelle Definition des isotaktischen Anteils $PP_{iso}$ in Prozent ist gegeben durch das Verhältnis der Gewichte der getrockneten n-heptanunlöslichen Fraktion zur Einwaage:

$$PP_{iso} = 100x\ (n\text{-}heptanunlösliche\ Fraktion/Einwaage)$$

Eine Analyse des getrockneten n-Heptan-Extraktes zeigt, daß dieser in der Regel nicht aus reinem ataktischen Propylenhomopolymeren besteht. Bei der Extraktion werden auch aliphatische und olefinische Oligomere, insbesondere isotaktische Oligomere sowie auch mögliche Zusatzstoffe wie z. B. hydrierte Kohlenwasserstoffharze und Wachs, miterfaßt.

Bestimmung des triadenbezogenen Kettenisotaxie-Index II (Triaden) sowie Bestimmung des Pentaden-Anteils

Probenvorbereitung und Messungen

60 bis 100 mg Polypropylen werden in 10mm-NMR-Röhrchen eingewogen. Nach Zugabe eines Lösemittelgemisch aus Hexachlorbutadien ($C_4Cl_6$) und deuteriertem Tetrachlorethan ($C_2D_2Cl_4$) wird die Suspension bei ca. 140 °C so lange aufbewahrt, bis eine homogene Lösung entstanden ist. Der Lösevorgang wird durch Rühren mit einem Glasstab beschleunigt. Die Aufnahme des $^{13}$C-NMR-Spektrums erfolgt bei erhöhter Temperatur (in der Regel 373 K) unter Standardmeßbedingungen (halbquantitativ).

Auswertung des $^{13}$C-NMR-Spektrums

Zur Beschreibung der Konfigurationsstatistik (Taktizität) von Polypropylen werden drei bzw. fünf Monomereinheiten zu Triaden und Pentaden zusammengefaßt. Bei einer Triade wird von der Methylgruppe der mittleren Wiederholeinheit aus die Konfiguration der Methylgruppen der benachbarten Monomereinheiten betrachtet. Haben alle drei Methylgruppen beim Abschreiten der Polymerkette in eine Richtung die gleiche Konfiguration, handelt es sich um eine mm-Triade.

Ist die Konfiguration der vorhergehenden und der nachfolgenden Methylgruppe gleich, aber unterschiedlich zur mittleren $CH_3$-Gruppe, handelt es sich um die rr-Triade.

Zwei weitere Anordnungen sind möglich, mr und rm. Sie sind allerdings nicht unterscheidbar, da beide Richtungen entlang der Polymerkette gleichwertig sind. Sie werden zur mr-Triade zusammengefaßt.

Die verschiedenen Triaden sind aufgrund ihrer unterschiedlichen chemischen Verschiebung im $^{13}$C-NMR-Spektrum unterscheidbar.

| | |
|---|---|
| Bereich der mm-Triade | ca. 20,8 - ca. 22,2 ppm |
| Bereich der mr-Triade | ca. 20,0 - ca. 20,8 ppm |
| Bereich der rr-Triade | ca. 19,2 - ca. 20,0 ppm |

Zur Berechnung des sogenannten triadenbezogenen Kettenisotaxie-Index II werden die Intensitäten der Triaden-Signale verglichen:

$$II \text{ (Triaden)} = \frac{Imm + 0.5\, Imr}{Imm + Imr + Irr} * 100$$

Wobei I mm, Imr und Irr die Integrale der zugeordneten Signalgruppen sind.

Eine erweiterte Betrachtungsweise ist die der Pentaden; hierbei wird die Konfiguration von fünf Methylgruppen fünf benachbarter Monomereinheiten verglichen. Es resultieren zehn unterscheidbare Pentaden.

| Pentade | chemische Verschiebung im ppm |
|---|---|
| mmmm | ca. 22,2 - ca. 21,25 |
| mmmr | ca. 21,25 - ca. 21,1 |
| rmmr | ca. 21,1 - ca. 20,8 |
| mmrr | ca. 20,8 - ca. 20,5 |
| rrmr + mmrm | ca. 20,5 - ca. 20,3 |
| mrmr | ca. 20,3 - ca. 20,0 |
| rrrr | ca. 20,0 - ca. 19,8 |
| mrrr | ca. 19,8 - ca. 19,6 |
| mrrm | ca. 19,6-ca. 19,2 |

Für die Referenzierung der Spektren wurde das Signal von Tetrachlorethan ($C_2D_2Cl_4$) auf 73,81 ppm gesetzt.

Der mmmm-Anteil wurde nach der folgenden Formel berechnet:

$$\text{mmmm-Anteil} = \frac{I\ mmmm}{I\ (\text{Summe aller Pentadenanteile})} * 100$$

Literatur:

NMR-spectroscopy and polymer microstructure von Alan E. Tonelli, 1989, VCH
Die Erfindung wird nun an Hand der nachstehenden Ausführungsbeispiele erläutert:

**Beispiel 1**

Es wurde durch Extrusion und anschließende stufenweise Orientierung in Längs- und Querrichtung eine transparente einschichtige Folie mit einer Gesamtdicke von 7,8$\mu$m hergestellt. Der Rohstoff hatte die folgende Zusammensetzung:

ca. 99,5 Gew.-%    hochisotaktisches Polypropylen der Firma Borealis (Bezeichnung HB 300 F)
0,45 Gew.-%    phenolischer Stabilisator Irganox 1010
0,0075 Gew.-%    Neutralisationsmittel Ca-Stearat

Das hochisotaktische Polypropylen hatte einen mittels $^{13}$C-NMR-Spektroskopie gemessenen Kettenisotaxie-Index nach Triadenanalyse von 96,25%, wobei hierbei 94,5% auf die mm-Triade, 3,5% auf die mr-Triade und 2,0% auf die rr-Triade entfielen. Die mittels mmmm-Pentade bestimmte Isotaxie betrug 89,9%. Das hochisotaktische Polypropylen hatte einen Chlorgehalt von < 5ppm und einen Aschegehalt von 20 ppm. Der n-heptanlösliche Anteil des Polypropylens betrug 1,7% (isotaktischer Anteil PP iso 98,3%). Das mittlere Molekulargewicht Mn betrug 64.600 g/mol und Mw 392.150 g/mol (gemessen mittels GPC) entsprechend einer Molekulargewichtsverteilung Mw/Mn von 6,07. Der Schmelzflußindex MFI (230°C und 2,16kp) betrug 1,45g/10min und der Schmelzpunkt 165°C.
Die Herstellungsbedingungen in den einzelnen Verfahrensschritten waren:

| | | |
|---|---|---|
| Extrusion: | Temperaturen | 250 °C |
| | Temperatur der Abzugswalze: | 86 °C |
| Längsstreckung: | Vorheiztemperatur: | 136°C |
| | Längsstrecktemperatur: | 148°C |
| | Längsstreckverhältnis: | 5,0 |
| Querstreckung: | Temperatur: | 163°C |
| | Querstreckverhältnis: | 9,6 |
| Fixierung: | Temperatur: | 130 °C |
| | Konvergenz: | 12,5 % |

Bei dem angegebenen Querstreckverhältnis handelt es sich um einen Effektivwert. Dieser Effektivwert berechnet sich aus der Endfolienbreite , reduziert um die zweifach Säumstreifenbreite , dividiert durch die Breite der längsgestreckten Folie, welche ebenfalls um die zweifache Säumstreifenbreite reduziert wird.

**Beispiel 2**

Es wurde eine Folie mit einer Gesamtdicke von 4,5$\mu$m wie in Beispiel 1 beschrieben hergestellt. Die Herstellbedingungen wurden wie folgt geändert:

| | | |
|---|---|---|
| Extrusion: | Temperaturen | 257 °C |
| | Temperatur der Abzugswalze: | 96 °C |
| Längsstreckung: | Vorheiztemperatur: | 127°C |
| | Längsstrecktemperatur: | 140°C |
| | Längsstreckverhältnis: | 4,5 |

(fortgesetzt)

| Querstreckung: | Temperatur: | 164 °C |
|---|---|---|
| | Querstreckverhältnis: | 9,6 |
| Fixierung: | Temperatur: | 135 °C |
| | Konvergenz: | 13,2 % |

**Vergleichsbeispiel 1**

Es wurde eine Folie mit einer Gesamtdicke von 7,8 $\mu$m wie in Beispiel 1 beschrieben hergestellt. Im Unterschied zu Beispiel 1 wurde jetzt ein isotaktisches Polypropylen der Fa. Borealis mit der Bezeichnung HB 311 F eingesetzt, mit folgender Zusammensetzung: 99,5 Gew.-% Polypropylen und 0,45 Gew.-% Irganox 1010 und 0,0075 Gew.-% Ca-Stearat.

Das isotaktische Polypropylen hatte einen mittels $^{13}$C-NMR-Spektroskopie gemessenen Kettenisotaxie-Index nach Triadenanalyse von 93,8%, wobei hierbei 91,3% auf die mm-Triade, 5,0% auf die mr-Triade und 3,7% auf die rr-Triade entfielen. Die mittels mmmm-Pentade bestimmte Isotaxie betrug 86,7%. Das isotaktische Polypropylen hatte einen Chlorgehalt von < 5 ppm und einen Aschegehalt von 22 ppm Der n-heptanlösliche Anteil des Polypropylens betrug 4,2% (isotaktischer Anteil PP iso 95,8%). Das mittlere Molekulargewicht Mn betrug 76.950 g/mol und Mw 314.600 g/mol (gemessen mittels GPC) entsprechend einer Molekulargewichtsverteilung Mw/Mn von 4,09. Der Schmelzflußindex MFI (230°C und 2,16kp) betrug 2,35g/10min und der Schmelzpunkt 160°C.

Die Querstrecktemperatur wurde um 2°C auf 163°C erhöht. Die übrigen Herstellbedingungen wurden gegenüber Beispiel 1 nicht verändert.

**Vergleichsbeispiel 2**

Es wurde eine Folie mit einer Gesamtdicke von 4,6 $\mu$m wie in Vergleichsbeispiel 1 beschrieben hergestellt.

Nur die Herstellbedingungen wurden wie folgt geändert:

| Extrusion: | Temperaturen | 248 °C |
|---|---|---|
| | Temperatur der Abzugswalze: | 92 °C |
| Längsstreckung: | Vorheiztemperatur: | 127°C |
| | Längsstrecktemperatur: | 140°C |
| | Längsstreckverhältnis: | 4,5 |
| Querstreckung: | Temperatur: | 161 °C |
| | Querstreckverhältnis: | 9,6 |
| Fixierung: | Temperatur: | 135 °C |
| | Konvergenz: | 13,2 % |

Die auf diese Weise hergestellten Folien hatte die in der Tabelle aufgelisteten Eigenschaften.

**Patentansprüche**

1. Biaxial orientierte Polypropylen-Folie verwendbar als Dielektrikumsfolie in Kondensatoren mit mindestens einer Basis-Schicht aus Polypropylen, das einen Kettenisotaxie-Index, gemessen mittels $^{13}$C-NMR-Spektroskopie und bestimmt nach der Triaden-Methode, von 95 - 98% aufweist und bei dem die isotaktische Pentadenfraktion 85 - 95% beträgt und der n-heptanunlösliche Anteil 97 bis 99% beträgt, wobei der Querschrumpf der Folie in Abhängigkeit von der Foliendicke d folgender Formel genügt:

| d: | < 4,5 $\mu$m | Querschrumpf bei 140°C maximal 6,5% |
|---|---|---|
| | | $\Delta$ Querschrumpf bei 140°C - Schrumpf bei 120°C = < 3,5% |
| | 4.5-12 $\mu$m | Querschrumpf bei 140°C maximal 5,5% |
| | | $\Delta$ Querschrumpf bei 140°C - Schrumpf bei 120°C = < 3,0% |
| | >12-20 $\mu$m | Querschrumpf bei 140°C maximal 4,5% |
| | | $\Delta$ Querschrumpf bei 140°C - Schrumpf bei 120°C = < 2,5% |

und der Längsschrumpf der Folie in Abhängigkeit von der Foliendicke d folgender Formel genügt

| d: | < 4,5 μm | Längsschrumpf bei 140°C maximal 8,0% und |
| | | Längsschrumpf bei 120°C maximal 5,5% und |
| | 4,5-12 μm | Längsschrumpf bei 140°C maximal 6,5% und |
| | | Längsschrumpf bei 120°C maximal 4,5% und |
| | ≥12-20 μm | Längsschrumpf bei 140°C maximal 5,5% und |
| | | Längsschrumpf bei 120°C maximal 4,0% |

und wobei das hochisotaktische Polypropylen einen Chlorgehalt von maximal 5 ppm und einen Aschegehalt von maximal 35 ppm aufweist.

2. Polypropylenfolie gemäß Anspruch 1 **dadurch gekennzeichnet, daß** die Folie mit einer Dicke von < 4,5 μm einen Querschrumpf bei 140°C von 2,0-5,5% und bei 120°C von ≤ 1,5% hat.

3. Polypropylenfolie gemäß Anspruch 2, **dadurch gekennzeichnet, daß** die Folie einen Längsschrumpf bei 140°C von 4-7% und bei 120°C von 2,0-4,5% hat.

4. Polypropylenfolie gemäß Anspruch 1, **dadurch gekennzeichnet, daß** die Folie mit einer Dicke von 4,5-12 μm einen Querschrumpf bei 140°C von 1,5-4,5% und bei 120°C von ≤ 1,2% hat.

5. Polypropylenfolie gemäß Anspruch 4, **dadurch gekennzeichnet, daß** die Folie einen Längsschrumpf bei 140°C von 3,5-6,0% und bei 120°C von 1,5-4,0% hat.

6. Polypropylenfolie gemäß Anspruch 1, **dadurch gekennzeichnet, daß** die Folie mit einer Dicke von ≥12-20 μm einen Querschrumpf bei 140°C von 1,0- 4,0% und bei 120°C von ≤ 1,0% hat.

7. Polypropylenfolie gemäß Anspruch 6, **dadurch gekennzeichnet, daß** die Folie einen Längsschrumpf bei 140°C von 3,0 - 5,0% und bei 120°C von 1,0-3,5% hat.

8. Polypropylenfolie gemäß einem oder mehreren der Ansprüche 1 bis 7, **dadurch gekennzeichnet, daß** das Polypropylen eine Molekulargewichtsverteilung Mw/Mn von 2 -8, vorzugsweise 4 - 7 aufweist.

9. Polypropylenfolie gemäß einem oder mehreren der Ansprüche 1 bis 8, **dadurch gekennzeichnet, daß** das Polypropylen einen Schmelzpunkt von 160 - 170°C, vorzugsweise 162 - 167°C aufweist.

10. Polypropylenfolie gemäß einem oder mehreren der Ansprüche 1 bis 9, **dadurch gekennzeichnet, daß** das hochisotaktische Polypropylen einen Aschegehalt von 10 bis 30 ppm aufweist.

11. Polypropylenfolie gemäß einem oder mehreren der Ansprüche 1 bis 10, **dadurch gekennzeichnet, daß** sie mindestens einseitig, vorzugsweise beidseitig, eine Deckschicht aus Propylenhomopolymer aufweist.

12. Polypropylenfolie gemäß einem oder mehreren der Ansprüche 1 bis 11, **dadurch gekennzeichnet, daß** die Deckschicht/en ein isotaktisches oder ein Propylenhomopolymer enthält/enthalten, dessen Kettenisotaxie-Index, gemessen mittels $^{13}$C-NMR-Spektroskopie bestimmt nach der Triadenmethode, von mindestens 94 °C, vorzugsweise 95,5 bis 98 %, und einen n-heptanunlöslichen Anteil von ≥95% aufweist.

13. Verfahren zur Herstellung einer Polypropylenfolie gemäß einem oder mehreren der Ansprüche 1 bis 12, bei dem die der Schicht oder den Schichten der Folie entsprechenden Schmelzen durch eine Flachdüse co/extrudiert werden, die so erhaltene Folie auf einer oder mehreren Walzen abgezogen wird und die Folie anschließend biaxial verstreckt wird, **dadurch gekennzeichnet, daß** die Orientierung in Längsrichtung mit einem Längsstreckverhältnis von 4 bis 8, vorzugsweise 4,5 bis 6,5 und in Querrichtung mit einem Querstreckverhältnis von 6 bis 10, vorzugsweise 7 bis 9,5 erfolgt.

14. Verfahren nach Anspruch 13, **dadurch gekennzeichnet, daß** die Temperatur der Abzugswalze im Bereich von 30 bis 120°C und die Vorheiztemperatur 110 bis 150°C beträgt und die Längsstrecktemperatur im Bereich von 120 bis 160°C und die Querstrecktemperatur im Bereich von 140 bis 170°C liegt.

**15.** Verfahren nach Anspruch 13 und/oder 14, **dadurch gekennzeichnet, daß** die Folie auf einer oder beiden Oberflächen corona- oder flammbehandelt ist und eine Oberflächenspannung von 34 bis 50, vorzugsweise 36 bis 45 mN/m aufweist.

**16.** Folie nach einem oder mehreren der Ansprüche 1 bis 12 **dadurch gekennzeichnet, daß** die Folie ein- oder beidseitig auf ihrer Oberfläche metallisiert ist.

**17.** Verwendung der Polypropylenfolie gemäß einem oder mehreren Ansprüche 1 bis 12 und 16 als Dielektrikumsfolie in Kondensatoren.

**18.** Kondensator enthaltend eine Folie gemäß einem oder mehren der Ansprüche 1 bis 12 und 16.


**Claims**

**1.** Biaxially-oriented polypropylene film for use as a dielectric film in capacitors, with at least one base layer made of polypropylene having a chain isotaxy index, measured by means of $^{13}$-NMR spectroscopy according to the triad method, of 95 - 98%, and in which the isotactic pentad fraction comes to 85 - 95% and the n-heptane insoluble portion comes to 97 to 99%, such that the lateral shrinkage of the film in relation to the thickness d of the film satisfies the following formula:

| d: | $<4.5\mu m$ | Maximum lateral shrinkage 6.5% at 140°C |
| | | $\Delta$ Lateral shrinkage at 140°C - Shrinkage at 120°C = <3.5% |
| | $4.5 - 12\mu m$ | Maximum lateral shrinkage 5.5% at 140°C |
| | | $\Delta$ Lateral shrinkage at 140°C - Shrinkage at 120°C = <3.0% |
| | $>12 - 20\mu m$ | Maximum lateral shrinkage 4.5% at 140°C |
| | | $\Delta$ Lateral shrinkage at 140°C - Shrinkage at 120°C = <2.5% |

and the longitudinal shrinkage of the film in relation to the thickness d of the film satisfies the following formula:

| d: | $<4.5\mu m$ | Maximum longitudinal shrinkage 8.0% at 140°C and |
| | | Maximum longitudinal shrinkage 5.5% at 120°C and |
| | $4.5 - 12\mu m$ | Maximum longitudinal shrinkage 6.5% at 140°C and |
| | | Maximum longitudinal shrinkage 4.5% at 120°C and |
| | $\geq 12 - 20\mu m$ | Maximum longitudinal shrinkage 5.5% at 140°C and |
| | | Maximum longitudinal shrinkage 4.0% at 120°C and |

and wherein the high isotactic polypropylene has a chlorine content of at most 5ppm, and an ash content of at most 35 ppm.

**2.** Polypropylene film according to claim 1, **characterised in that** the film with a thickness of $< 4.5\mu m$ has a lateral shrinkage of 2.0 - 5.5% at 140°C and of $\leq 1.5\%$ at 120°C.

**3.** Polypropylene film according to claim 2, **characterised in that** the film has a longitudinal shrinkage of 4 - 7 % at 140°C and of 2.0 - 4.5% at 120°C.

**4.** Polypropylene film according to claim 1, **characterised in that** the film with a thickness of 4.5 - 12$\mu$m has a lateral shrinkage of 1.5 - 4.5% at 140°C and of $\leq 1.2\%$ at 120°C.

**5.** Polypropylene film according to claim 4, **characterised in that** the film has a longitudinal shrinkage of 3.5 - 6.0% at 140°C and of 1.5 - 4.0% at 120°C.

**6.** Polypropylene film according to claim 1, **characterised in that** the film with a thickness of $\leq 12 - 20\mu m$ has a lateral shrinkage of 1.0 - 4.0% at 140°C and of $\leq 1.0\%$ at 120°C.

**7.** Polypropylene film according to claim 6, **characterised in that** the film has a longitudinal shrinkage of 3.0 - 5.0% at 40°C and of 1.0 - 3.5% at 120°C.

8. Polypropylene film according to one or several of the claims 1 to 7, **characterised in that** the polypropylene has a molecular weight distribution of 2 - 8, preferably 4 - 7.

9. Polypropylene film according to one of several of the claims 1 to 8, **characterised in that** the polypropylene has a melting point of 160 - 170°C, preferably 162 - 167°C.

10. Polypropylene film according to one or several of the claims 1 to 9, **characterised in that** the high isotactic polypropylene has an ash content of 10 to 30 ppm.

11. Polypropylene film according to one or several of the claims 1 to 10, **characterised in that** it features a top layer made of propylene homopolymer at least on one side, and preferably on both sides.

12. Polypropylene film according to one of several of the claims 1 to 11, **characterised in that** the top layer(s) contain(s) an isotactic or a propylene homopolymer, the chain isotaxy index of which, measured by means of $^{13}$C-NMR spectroscopy according to the triad method, comes to at least 94%, preferably 95.5% to 98%, and contains an n-heptane insoluble portion of $\geq$95%.

13. Procedure for the manufacture of a polypropylene film according to one or several of the claims 1 to 12, in which the melts corresponding to the layer or layers of the film are coextruded through a flat die, the film so obtained is pulled of on one or several rollers and the film is subsequently stretched biaxially, **characterised in that** orientation in the longitudinal direction is carried out with a longitudinal stretch ratio of 4 to 8, preferably 4.5 to 6.5, and in the lateral direction with a lateral stretch ratio of 6 to 10, preferably 7 to 9.5.

14. Procedure according to claim 13, **characterised in that** the temperature of the outfeed roller is in the region of 30 to 120°C and the preheated temperature comes to 110 to 150°C, and the longitudinal stretching temperature lies in the region of 120 to 160°C and the lateral stretching temperature in the region of 140 to 170°C.

15. Procedure according to claim 13 and/or 14, **characterised in that** the film is corona- or flame-treated on one or both surfaces and has a surface tension of 34 to 50, preferably 36 to 45 mN/m.

16. Film according to one or several of the claims 1 to 12, **characterised in that** the film is metallised on its surface on one or both sides.

17. Use of the polypropylene film, as per one or several of the claims 1 to 12 and 16, as a dielectric film in capacitors.

18. Capacitor containing a film as per one or several of the claims 1 to 12 and 16.

**Revendications**

1. Film de polypropylène orienté biaxialement utilisablecomme un film diélectrique dans des condensateurs, avec au moins une couche de base faite de polypropylène ayant un indice d'isotacticité de chaîne, mesuré au moyen de la spectroscopie RMN $^{13}$C selon le procédé de triade, de 95 à 98 %, et dans lequel la fraction de pentade isotactique va de 85 à 95 % et la portion insoluble dans le n-heptane va de 97 à 99 %, de sorte que le rétrécissement latéral du film par rapport à l'épaisseur d du film satisfasse la formule suivante :

d :   < 4,5 $\mu$m   Rétrécissement latéral maximum de 6,5 % à 140 °C
                      $\Delta$ du rétrécissement latéral à 140 °C - rétrécissement à 12 °C = < 3,5 %
       4,5 - 12 $\mu$m   Rétrécissement latéral maximum de 5,5 % à 140 °C
                      $\Delta$ du rétrécissement latéral à 140 °C - rétrécissement à 120 °C = < 3,0 %
       > 12 20 $\mu$m   Rétrécissement latéral maximum de 4,5 % à 140 °C
                      $\Delta$ du rétrécissement latéral à 140 °C - rétrécissement à 120 °C = < 2,5 %

et le rétrécissement longitudinal du film par rapport à l'épaisseur d du film satisfasse la formule suivante :

| d: | < 4,5 μm | Rétrécissement longitudinal maximum de 8,0 % à 140 °C et |
| | | Rétrécissement longitudinal maximum de 5,5 % à 120 °C et |
| | 4,5 - 12 μm | Rétrécissement longitudinal maximum de 6,5 % à 140 °C et |
| | | Rétrécissement longitudinal maximum de 4,5 % à 120 °C et |
| | ≥ 12 - 20 μm | Rétrécissement longitudinal maximum de 5,5 % à 140 °C et |
| | | Rétrécissement longitudinal maximum de 4,0 % à 120 °C et |

et dans lequel le polypropylène d'indice d'isotacticité élevé a une teneur en chlore d'au plus 5 ppm et une teneur en cendres d'au plus 35 ppm.

2. Film de polypropylène selon la revendication 1, **caractérisé en ce que** le film avec une épaisseur < 4,5 μm a un rétrécissement latéral de 2,0 à 5,5 % à 140 °C et ≤ 1,5 % à 120 °C.

3. Film de polypropylène selon la revendication 2, **caractérisé en ce que** le film a un rétrécissement longitudinal de 4 à 7 % à 140 °C et de 2,0 à 4,5 % à 120 °C.

4. Film de polypropylène selon la revendication 1, **caractérisé en ce que** le film avec une épaisseur de 4,5 à 12 μm a un rétrécissement latéral de 1,5 à 4.5 % à 140 °C et 1,2 % à 120 °C.

5. Film de polypropylène selon la revendication 4, **caractérisé en ce que** le film a un rétrécissement longitudinal de 3,5 à 6,0 % à 140 °C et de 1,5 à 4,0 % à 120 °C.

6. Film de polypropylène selon la revendication 1, **caractérisé en ce que** le film avec une épaisseur ≥ une gamme de 12 à 20 μm a un rétrécissement latéral de 1,0 à 4,0 % à 140 °C et ≤ 1,0 % à 120 °C.

7. Film de polypropylène selon la revendication 6, **caractérisé en ce que** le film a un rétrécissement longitudinal de 3,0 à 5,0 % à 140 °C et de 1,0 à 3,5 % à 120 °C.

8. Film de polypropylène selon une ou plusieurs des revendications 1 à 7, **caractérisé en ce que** le polypropylène a une distribution de masse moléculaire de 2 à 8, de préférence de 4 à 7.

9. Film de polypropylène selon une ou plusieurs des revendications 1 à 8, **caractérisé en ce que** le polypropylène a une température de fusion dans la gamme de 160 à 170 °C, de préférence de 162 à 167 °C.

10. Film de polypropylène selon une ou plusieurs des revendications 1 à 9, **caractérisé en ce que** le polypropylène d'indice d'isotacticité élevé a une teneur en cendres de 10 à 30 ppm.

11. Film de polypropylène selon une ou plusieurs des revendications 1 à 10, **caractérisé en ce qu'**il comprend une couche supérieure faite d'un homopolymère de propylène au moins d'un côté, et de préférence des deux côtés.

12. Film de polypropylène selon une ou plusieurs des revendications 1 à 11, **caractérisé en ce que** la ou les couches supérieures contiennent un polymère isotactique ou un homopolymère de propylène, dont l'indice d'isotacticité de chaîne, mesuré au moyen de la spectroscopie RMN $^{13}$C selon le procédé de triade, va jusqu'à au moins 94 %, de préférence de 95,5 % à 98 %, et contient une portion insoluble dans le n-heptane ≥ 95 %.

13. Procédé de fabrication d'un film de polypropylène selon une ou plusieurs des revendications 1 à 12, dans lequel les bains correspondant à la couche ou aux couches du film sont coextrudés à travers une matrice plate, le film ainsi obtenu est tiré sur un ou plusieurs rouleaux et le film est ultérieurement biaxialement étiré, **caractérisé en ce que** l'orientation dans la direction longitudinale est effectuée avec un rapport d'étirement longitudinal dans la gamme de 4 à 8, de préférence de 4,5 à 6,5, et dans la direction latérale avec un rapport d'étirement latéral dans la gamme de 6 à 10, de préférence de 7 à 9,5.

14. Procédé selon la revendication 13, **caractérisé en ce que** la température du rouleau de sortie est dans la région de 30 à 120 °C et la température de préchauffage va de 110 à 150 °C, et la température d'étirement longitudinal se situe dans la région de 120 à 160 °C et la température d'étirement latéral dans la région de 140 à 170 °C.

**15.** Procédé selon la revendication 13 et/ou 14, **caractérisé en ce que** le film est traité par effet couronne ou une flamme sur une ou les deux surfaces et a une tension superficielle de 34 à 50, de préférence de 36 à 45 mN/m.

**16.** Film selon une ou plusieurs des revendications 1 à 12, **caractérisé en ce que** le film est métallisé sur sa surface sur un ou les deux côtés.

**17.** Utilisation du film de polypropylène, selon une ou plusieurs des revendications 1 à 12 et 16, sous la forme d'un film diélectrique dans des condensateurs.

**18.** Condensateur contenant un film selon une ou plusieurs des revendications 1 à 12 et 16.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0645426 A
- EP 776926 A
- EP 775779 A
- WO 9705634 A
- EP 0497160 A
- US 4622237 A

### In der Beschreibung aufgeführte Nicht-Patentliteratur

- **ALAN E. TONELLI.** NMR-spectroscopy and polymer microstructure. VCH, 1989